# EUROPEAN PATENT SPECIFICATION

(11) **EP 2 198 951 B1**
(45) Date of publication and mention of the grant of the patent: **31.07.2013**
(21) Application number: 09252797.7
(22) Date of filing: 16.12.2009
(51) Int. Cl.: B01J 8/02, B01J 8/04, B01J 19/24, C01B 3/38

(54) **Reformer**
Reformer
Reformeur

(30) Priority: 19.12.2008 KR 20080130258
(43) Date of publication of application: 23.06.2010
(73) Proprietor: Samsung SDI Co., Ltd., Gyeonggi-do (KR)
(72) Inventor: Lee, Sung-Chul, Yongin-si, Gyeonggi-do (KR); Shin, Woo-Cheol, Yongin-si, Gyeonggi-do (KR); Son, In-Hyuk, Yongin-si, Gyeonggi-do (KR); Ahn, Jin-Goo, Yongin-si, Gyeonggi-do (KR)
(74) Representative: Mounteney, Simon James

(56) References cited:
- EP-A1- 1 987 876
- EP-A2- 1 977 822
- WO-A2-2009/101434
- DE-A1-102006 019 409
- KR-A- 20060 065 778
- US-A- 4 971 770
- US-A- 5 415 233
- US-A1- 2002 028 164
- US-A1- 2004 029 057
- US-A1- 2004 154 222
- US-A1- 2004 265 224
- US-A1- 2006 144 599
- US-A1- 2007 212 276

## Description

### BACKGROUND

### Field of the Invention

The present invention relates to a reformer capable of preventing a flash back generated from a reaction part in a catalytic oxidation method.

### Description of the Related Art

A fuel cell is a high efficiency power generation system that directly converts chemical energy to electric energy and is environment-friendly in that it has little discharge of pollution material. Therefore, fuel cells have been spotlighted as a next generation clean energy source.

US 2004/265224 discloses an autothermal reactor and method for producing synthesis gas in which a heated oxygen containing stream is expanded into a mixing chamber to entrain a hydrocarbon containing stream to form a reactant stream without reaction of the oxygen and hydrocarbon contents of the streams.

KR 2006 0065778 discloses a reformer that comprises two chambers, with a mixing part adjacent one of the chambers.

DE 10 2006 019 409 discloses a reformer that has two chambers, with a distribution element adjacent one of the chambers.

### SUMMARY OF CERTAIN INVENTIVE ASPECTS

The present invention sets out to provide a reformer that prevents a flash back by preventing a high temperature portion not desired from being formed in a reaction part in a catalytic oxidation method and forming a gas hourly space velocity in the reaction part through an improvement of fuel distribution.

The invention also sets out to provide a reformer that offers improved compactness or reformer efficiency and a fuel cell system having the same.

Accordingly, a first aspect of the invention provides a reformer that includes a first reaction part having a first chamber and a first catalyst disposed inside the first chamber, the first reaction part configured to generate heat by burning a first fuel, a second reaction part having a second catalyst, the second reaction part configured to be heated by the first reaction part and the second reaction part further configured to reform a second fuel and a flash back prevention part disposed on an upstream side of a flow of the first fuel and oxidant, the flash back prevention part configured to introduce the first fuel and the oxidant across a predetermined interval from the first catalyst. The predetermined interval has a range of between about 5 mm to about 15 mm, wherein a length of the flash back prevention part is in the range of between 50% to 100% of a width of the flash back prevention part, and wherein the length of the flash back prevention part is oriented in the direction of first fuel flow. In some embodiments one end of the second catalyst is disposed adjacent to the flash back prevention part.

In some embodiments the first catalyst comprises a first substrate having a plurality of paths and active materials supported in the first substrate. In some embodiments the first substrate may include a monolith. In some embodiments the monolith has the same cross-sectional structure and shape as the first substrate. In some embodiments a cross-section of the monolith has a honeycomb shape. In some embodiments the monolith has a spiral shape, wherein a first member on a sheet and a corrugated second member are overlappedly wound. In some embodiments an open frontal area of a plurality of paths of the monolith is in the range, for example, of between 40% to 95% of the cross-section of the monolith. In some embodiments a cell density of the monolith is between, for example, 200 cells per square inch ("cpsi") to 1300 cpsi, that is 31 to 232,5 cells per cm².

In some embodiments the second reaction part comprises a second chamber contacting the first chamber and a second substrate disposed inside the second chamber, and wherein the second catalyst further comprises a second substrate and an active material supported in the second substrate. In some embodiments one end of the second substrate is positioned on an upstream side, wherein the one end of the second substrate is configured to receive the second fuel, and wherein the one end of the second substrate is disposed adjacent to the flash back prevention part. In some embodiments the second substrate has a pellet or a marble shape. In some embodiments the second substrate comprises a ceramic or a metal monolith.

In some embodiments the first reaction part and the second reaction part have a double pipe structure whose both ends are closed, each having a plurality of opening parts for fluid movement. In some embodiments the first fuel comprises at least one material selected from the group consisting of butane, methane, natural gas, propane gas and diesel. In some embodiments the first fuel comprises, for example, PdAl₂O₃, NiO, CuO, CeO₂ or Al₂O₃, Pu, Pd and Pt, and a combination thereof with a substrate made of, for example, alumina Al₂O₃, silica SiO₂ or TiO₂. In some embodiments the reformer further comprises a nozzle injecting the first fuel into the first reaction part. In some embodiments the reformer further comprises an igniter igniting the first fuel supplied to the first reaction part.

The above and other features of the invention are set out in the appended Claims.

### BRIEF DESCRIPTION OF THE DRAWINGS

The foregoing and other features of the present disclosure will become more fully apparent from the following description and appended claims, taken in conjunction with the accompanying drawings. It will be understood these drawings depict only certain embodiments in accordance with the disclosure and, therefore, are not to be considered limiting of its scope; the disclosure will be described with additional specificity and detail through use of the accompanying drawings. An apparatus according to some of the described embodiments can have several aspects, no single one of which necessarily is solely responsible for the desirable attributes of the apparatus. After considering this discussion, and particularly after reading the section entitled "Detailed Description of Certain Embodiments" one will understand how illustrated features serve to explain certain principles of the present disclosure.

FIG. 1 is a perspective view of one embodiment of a reformer according to the invention.

FIG. 2 is a cross-sectional view taken along line II-II of the reformer in FIG. 1.

FIG. 3 is a cross-sectional view of another embodiment of a reformer according to the invention.

FIG. 4 is a perspective view of one embodiment of a flash back prevention part according to the invention.

FIG. 5 is a perspective view of another embodiment of a flash back prevention part according to the invention.

### DETAILED DESCRIPTION OF CERTAIN EMBODIMENTS

In the following detailed description, certain embodiments have been shown and described, simply by way of illustration. Accordingly, the drawings and description are to be regarded as illustrative in nature and not restrictive. In addition, when an element is referred to as being "on" another element, it can be directly on the element or be indirectly on the element with one or more intervening elements interposed therebetween. Also, when an element is referred to as being "connected to" another element, it can be directly connected to the element or be indirectly connected to the element with one or more intervening elements interposed therebetween. Hereinafter, like reference numerals refer to like elements.

Hereinafter, certain embodiments will be described in more detail with reference to the accompanying drawings, so that a person having ordinary skill in the art can readily make and use aspects of the present disclosure.

High temperature fuel cells may operate at temperatures of more than about 600°C. These include molten carbonate fuel cells and solid oxide fuel cells, etc. Middle temperature fuel cells may operate at temperatures of greater than 200°C. These include phosphoric acid fuel cells. Both high temperature fuel cells and middle temperature fuel cells have been developed to be used, for example, in large-scale power generation or bio gas plant, etc. Polymer electrolyte fuel cells (PEFCs) may operate at temperatures of 1000°C or less, adopting polymer electrolyte membranes. PEFCs have been developed to be mainly used, for example, as a transportable power source, as a power source used in a home and/or as a portable power source. A PEFC system may comprise a system in which hydrogen gas is directly used. A PEFC system may comprise a reformer-based system in which hydrocarbon-based fuels are used.

In general, a reformer functions to convert hydrocarbon-based fuels such as liquefied natural gas (LNG), liquefied petroleum gas (LPG), and diesel, etc. or alcohol-based fuels such as butyl alcohol, etc. into compounds mixed with hydrogen and carbon monoxide, etc. For example, a reforming reaction with butane may occur at a temperature of 600°C and a reforming reaction with methane may occur at a temperature of 800°C. Both a reforming reaction using butane and steam or a reforming reaction using methane and carbon dioxide are endothermic reactions.

In a reformer configured to use hydrocarbon-based fuels such as butane or methane, a heat source is needed that can supply thermal energy required in operated at a temperature of 600°C or more. Such a heat source generally includes a burner. Using a burner, however, generally requires a minimum combustion space to avoid direct heat. Such a configuration is not suitable for smaller reformers.

Alternately, a reformer may use a heat source employing a catalytic oxidation reaction. The heat source in the catalytic oxidation method has another advantage in that the heat source itself has relatively even temperature distribution. It also, however, may have a drawback in that a flash back may be generated from a catalyst layer to an upstream side (into which fuels are introduced) under a high temperature environment of 600°C or more. The flash back may cause flames on fuel supply nozzles of the reformer and thus it may negatively influence the life time of the reformer.

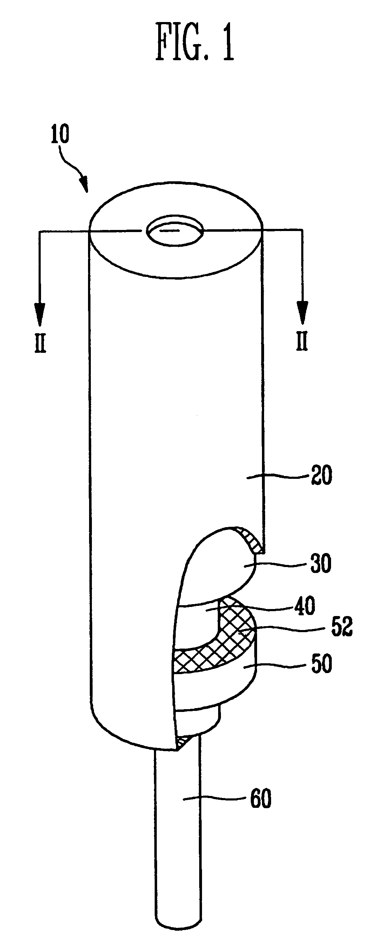

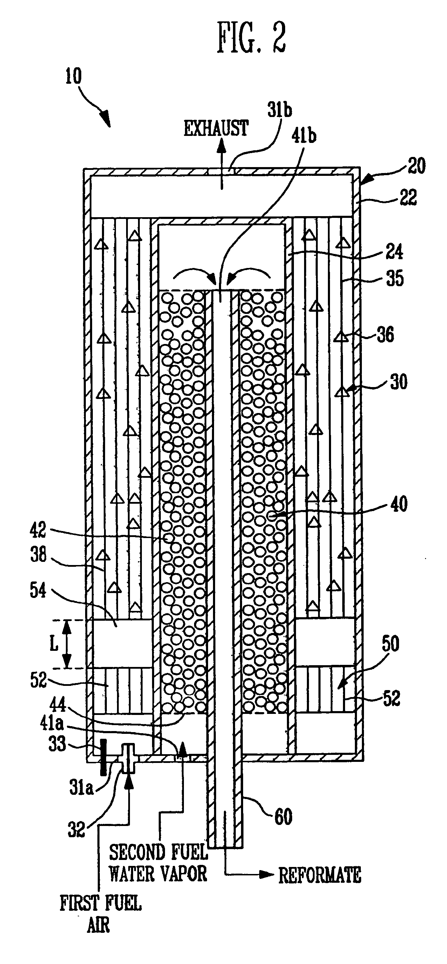

FIG. 1 is a perspective view of a reformer according to one embodiment of the present disclosure. FIG. 2 is a cross-sectional view taken along line II-II of the reformer in FIG. 1.

Referring to FIGS. 1 and 2, the reformer 10 includes a housing 20 forming at least one chamber, a first reaction part 30 disposed inside the housing 20, a second reaction part 40 disposed inside the housing 20 and a flash back prevention part 50 disposed inside the housing 20. In the illustrated embodiment, the housing 20 is formed in a pipe shape whose both ends are substantially closed, having a predetermined cross-section and having a plurality of opening parts for a fluid movement. In some embodiments the housing 20 may be formed of metal having adiabatic capacity or non-metal adiabatic material.

The housing 20 has a double pipe structure. The first housing 22 has a pipe shape whose both sides are substantially closed, having a predetermined first cross-section. The second housing 24 has a pipe shape whose both ends are substantially closed, having a second cross-section smaller than the first cross-section, and is surrounded by the first housing 22 in a longitudinal direction of the pipe. An inner circumferential surface of the first housing 22 is spaced from an outer circumferential surface of the second housing 24 at a predetermined distance and an inner circumferential surface of the second housing 24 is spaced from an outer circumferential surface of a pipe 60 at a predetermined distance.

The pipe 60 has both ends substantially opened, having a third cross-section smaller than the second cross-section of the second housing 24. The pipe 60 functions as a path for transferring reformate generated from a second reaction part 40 in the second housing 24 to the outside of the housing 24.

In the space between the first housing 22 and the second housing 24, there is provided a first chamber for the first reaction part 30. In the space between the second housing 24 and the pipe 60, there is provided a second chamber for the second reaction part 40. As the first reaction part 30 and the second reaction part 40 are formed in a double pipe structure, it has a shape that the second reaction part 40 is surrounded by the first reaction part 30, making it possible to efficiently supply the heat generated from the first reaction part 30 to the second reaction part 40. Therefore, the heat efficiency of the reformer can be enhanced.

The first reaction part 30 serves to function as a heat source to supply heat required in the reforming reaction of the second reaction part 40. The first reaction part 30 may have a reaction temperature in the range of from 600°C to about 800°C.

The first reaction part 30 of the present embodiment includes a first substrate 35 disposed in the first chamber and active materials 36 supported in the first substrate 35. The substrate 35 includes a monolith having a plurality of paths 38. The monolith may be implemented as a ceramic or metal monolith. Hereinafter, the substrate supported in the active materials will generally be referred to as a catalyst. In other words, the first substrate 35 supported in the active materials 36 may form a first catalyst.

The first catalyst oxidizes first fuel, as an oxidation catalyst, to generate heat and combustion gas. The first catalyst may be formed by supporting material selected from the group consisting of PdAl₂O₃, NiO, CuO, CeO₂ and Al₂O₃, Pu, Pd and Pt, and/or a combination thereof in a substrate, which may be made of alumina Al₂O₃, silica SiO₂ and/or TiO₂. The first catalyst oxidizes and/or reduces the substrate having a plurality of paths to allow the active material to be directly supported in the substrate.

The first reaction part 30 also includes at least one first opening part 31a into which the first fuel and oxidant are introduced, and a second opening part 31 b which discharges combustion gas. A nozzle 32 is provided in the first opening part 31a. The nozzle 32 serves to inject the first fuel to the inside of the first reaction part 30. Also, the first reaction part 30 has an igniter 33, wherein the igniter 33 ignites the first fuel injected to the inside of the reaction part 30.

The second reaction part 40 is configured to receive heat from the first reaction part 30 and is configured to reform the second fuel to form reformate. In the present illustrated embodiment, the second reaction part 40 includes a second catalyst 42 having active material supported in the substrate in a pellet or marble shape disposed in the second chamber. The second reaction part 40 includes a reticular formation 44 surrounding the second catalyst 42 for preventing the dissipation of the second catalyst 42. In some embodiments the second catalyst 42 may be disposed in the second chamber, while being charged in a plurality of pipe-shaped reactors.

The second catalyst 42 may be formed by supporting material selected from the group consisting of Cu-Zn, Ni/Al₂O₃, Ru/ZrO₂, Ru/Al₂O₃/Ru/CeO₂-Al₂O₃, and/or a combination thereof in a substrate, which may be formed in a pellet shape and which may be made of alumina Al₂O₃, silica SiO₂ and/or TiO₂.

One end of the second catalyst 42 is disposed adjacent to a flash back prevention part 50. The flash back prevention part 50 is disposed inside the first chamber of the first reaction part 30 to be heated by the heat generated when the first fuel is burnt. Thus, the heat can be transferred to the second catalyst 42 through the heated flash back prevention part 50. With a construction as described above, the heat efficiency of the reformer 10 can be improved.

The second reaction part 40 also includes at least one first opening part 41 a into which second fuel and steam are introduced, and at least one second opening part 41b which discharges reformate generated by the reforming reaction of the second fuel and steam. The second opening part 41b is connected to one end of the pipe 60 positioned in the central portion of the housing 20. Another end of the pipe 60 is exposed to the outside of the housing 20. The reformate may be supplied to a fuel cell stack, etc., through the pipe 60.

In the illustrated embodiment described above, the flash back can be generated in the case where fuel such as butane is burnt using a catalytic oxidation reaction when heat is supplied from the first reaction part 30 to the second reaction part 40. However, the flash back prevention part 50 is disposed on an upstream side into which the first fuel in the first chamber is introduced to prevent the flash back that may be generated from the first reaction part 30.

In particular, in the case of a reformer having a double pipe structure, large hot spots may be generated from one end of the first catalyst into which the first fuel and air start to flow and the flash back may be generated by means of the hot spots. However, if the flash back prevention part 50 of the illustrated embodiment is used, this can be prevented.

Here, the flash back means a phenomenon that may occur when the first fuel and/or the air are not evenly dispersed and/or supplied to entire regions of the first catalyst 36, but instead are concentrated on a certain region of the first catalyst 36 such that flames are generated from the region where heat energy is concentrated. The certain region(s) may generate flames by means of a local oxidation reaction of the first fuel and the air. The flames that are thus generated may then spread to the upstream side in view of the flow of the first fuel.

The flash back prevention part 50 of the illustrated embodiment has the same or similar structure as the first substrate 35 disposed inside the first reaction part 30 to more efficiently prevent the flash back. Also, the flash back prevention part 50 is disposed having a predetermined space 54 from the first substrate 35. In other words, the flash back prevention part 50 and the first substrate 35 are disposed having a predetermined interval "L". The interval L is in the range of from 5 mm and 15 mm.

If the interval L is less than 5 mm, the fuel passing through the flash back prevention part 50 may not be smoothly distributed to the plurality of paths 38 of the substrate 35 to generate difference in linear velocity of the fuel from the respective paths 38 and thereby, the flash back may be generated. If the interval L is greater than 15 mm, the fuel distributed from the flash back prevention part 50 may be combined again so that the fuel distribution effect disappears. Therefore, if the difference in linear velocity of the fuel is generated from the plurality of paths, the flash back may be generated thereby.

The flash back prevention part 50 is implemented as a monolith substantially the same as the monolith substrate 35 but in a state where the catalyst is not supported. However, the flash back prevention part 50 may alternatively be different from the monolith substrate 35 of the first catalyst only in view of the size in one direction.

The flash back prevention part 50 properly distributes the first fuel and air supplied through the first opening part 31a and/or the nozzle 32, and forms a gas hourly space velocity between the first opening part 31a and the first catalyst. Thereby, the flash back prevention part 50 can prevent a relatively high temperature portion from being formed on one end portion and prevent the flash back from being generated from the first reaction part 30. The operation process of the reformer 10 as mentioned above will be described in more detail below.

If the first fuel and air are supplied to the inside of the first reaction part 30 through the nozzle 32 and/or the first opening part 31a, the first fuel and air are distributed through the plurality of paths 52 of the flash back prevention part 50 to enter the plurality of paths 38 of the first catalyst 36. In other words, the structure and shape of the flash back prevention part 50 having the plurality of paths 52 is substantially the same as those of the substrate 35 having the plurality of paths 52 so that the first fuel and air flowing into the first reaction part 30 may naturally flow into the paths 38 of the substrate 35, after passing through the flash back prevention part 50.

The first fuel and air introduced into the paths 38 of the substrate 35 are burnt, being subject to an exothermal oxidation reaction by means of catalysis of the first catalyst. At the same time, the generation of the relatively large hot spots from one end of the first catalyst positioned on the upstream side to which the first fuel is introduced is prevented so that the flash back is not generated. The thermal energy generated from the first reaction part 30 may be supplied to the second reaction part 40.

Simultaneously, the flash back prevention part 50 disposed inside the first chamber of the first reaction part 30 is also heated at a temperature substantially the same as the first reaction part 30 to function as a heat source supplying heat to the second reaction part 40, together with the first reaction part 30. The combustion gas generated by the oxidation reaction of the first fuel may be discharged to the external through the second opening part 31b.

Meanwhile, the second fuel and steam flowing into the inside of the second reaction part 40 through the nozzle 23 and/or another first opening part 41a perform a steam reforming reaction with assistance of the second catalyst 42 that promotes the reforming reaction. The steam reforming reaction dissolves the steam and hydrocarbon fuel under a high temperature atmosphere to reconstitute them as hydrogen molecules and carbon dioxide. When butane is used as the second fuel, a relative equation of the steam reforming reaction is as shown in Reaction Equation 1 below:

Reaction Equation 1 C₄H₁₀ + 8H₂O ↔ 4CO₂ + 13H₂

Referring to Reaction Equation 1, the steam reforming reaction generates hydrogen molecules in a high energy state from water molecules in a low energy, thereby being an endothermic reaction. The steam reforming reaction has an advantage having a lot of hydrogen generating quantity. A reformate generated from the second reaction part 40 is discharged to the external through the pipe 60 connected to the second opening part 41b. The reformate may include, for example, hydrogen gas and carbon dioxide, etc.

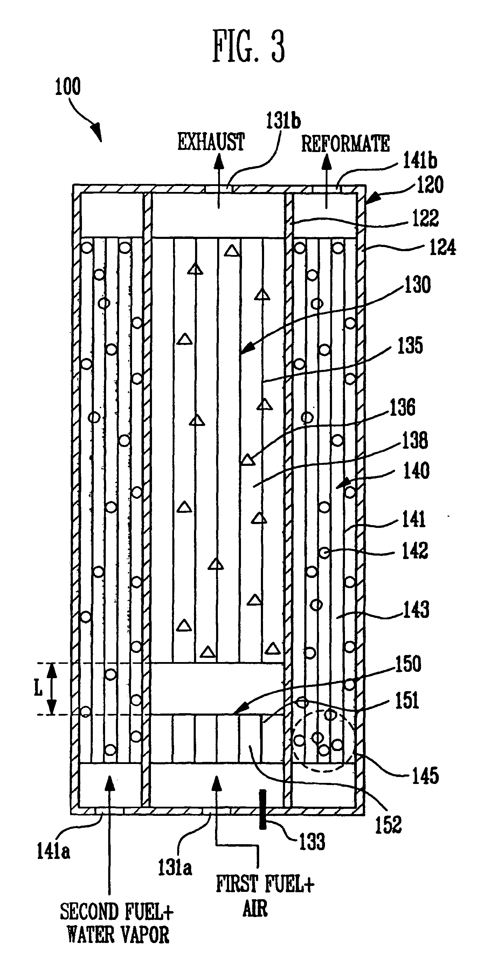

FIG. 3 is a cross-sectional view of a reformer according to another embodiment of the present invention. Referring to FIG. 3, the reformer 100 includes a housing 120 having a double pipe structure and forming a first chamber and a second chamber, and a first reaction part 130, a second reaction part 140 and a flash back prevention part 150 each disposed inside the housing 120.

The housing 120 includes a first housing 122 which has a pipe shape, wherein both sides are substantially closed. The first housing 122 having a predetermined first cross-section and a predetermined length. The housing 120 also includes a second housing 124 having a pipe shape, wherein both ends are substantially closed. The second housing 124 having a second cross-section smaller than the first cross-section and the second housing 124 being surrounded by the first housing 122 in a longitudinal direction of the pipe. The first housing 122 includes at least one first opening part 131 a into which first fuel and air are introduced and at least one second opening part 131 b which discharges combustion gas generated when the oxidation reaction of the first fuel is performed. The second housing 124 includes at least one first opening part 141 a into which second fuel and steam are introduced and at least one second opening part 141b which discharges reformate generated by the reforming reaction of the second fuel and steam.

The first reaction part 130 includes a first chamber formed by the first housing 122. The first reaction part 130 includes a substrate 135 having a plurality of paths 138 disposed inside the first chamber and extended in one direction and active materials 136 supported in the substrate 135. The substrate 135 supported with the active material 136 forms the first catalyst.

The substrate 135 may be implemented as a ceramic or metal monolith. The substrate 135 may be implemented in the manner that adjacent paths of the plurality of paths 138 are connected to each other to be fluid communicable in their middle portions.

The first catalyst oxidizes and/or reduces the substrate 135 to allow the substrate 135 to be supported directly with the active materials 136. For example, the first catalyst can be fabricated using a solid phase crystallization method (SPC-) to burn or reduce a crystalline precursor homogeneously containing active metal species. As the precursor, perovskite or hydrotalcite-based precursor may be used. For example, Mg-Al based HT containing nickel (Ni) is prepared as a precursor and a Mg-Al based solid solution is generated by burning the prepared precursor and is reduced, thereby making it possible to fabricate a highly dispersed and stable spc-Ni/MgAl catalyst.

In some embodiments a catalyst basically means a support supported with active materials. However, a catalyst may include an active material itself acting catalysis in a wide meaning or a catalyst system which has a structure having the substrate added with another substrate supported with the active materials so that a specific geometric surface area becomes more than a predetermined size (for example, 100m²/g).

The second reaction part 140 includes a second chamber formed by a outer surface of the first housing 122 and an inner surface of the second housing 124. The second reaction part 140 includes a second substrate 141 having a plurality of paths 143 disposed inside the second chamber and extended in one direction, and active materials 142 coated on the second substrate 141.

The second substrate 141 may be implemented as a ceramic or metal monolith. For example, when the first substrate 135 of the first reaction part 130 is a first metal monolith, the second substrate of the second reaction part 140 may be implemented as a second metal monolith surrounding the first metal monolith. The second substrate 141 may be implemented in the manner that adjacent paths of the plurality of paths 143 are connected to each other to be fluid communicable in their middle portions.

The second substrate 141 supported with the active materials 142 forms a second catalyst. The second catalyst may be implemented in a manner that the active materials are coated on the substrate or the active materials are directly supported in the substrate by oxidizing and/or reducing the substrate. One end 145 of the second substrate 141 is disposed adjacent to a flash back prevention part 150. The flash back prevention part 150 is disposed inside the first chamber of the first reaction part 130 to be heated by the heat generated when the first fuel is burnt. Thus, the heat can be transferred to the active materials 142 through the heated flash back prevention part 150. With a construction as described above, the heat efficiency of the reformer 100 can be improved.

The flash back prevention part 150 is disposed between the first opening part 131a and the second substrate 135 in the first chamber. The flash back prevention part 150 has a body 151 made of ceramic or metallic material.

The body 151 has a plurality of paths 152 extended in one direction. When the first substrate 135 of the first reaction part 130 is a metal monolith, the body 151 of the flash back prevention part 150 is preferably formed of substantially the same monolith as the first substrate 135. In some embodiments the body 151 is not supported with the catalyst.

Also, the flash back prevention part 150 and one end of the substrate 135 of the first reaction part 130, that is, one end facing the first opening part 131a, are disposed having an interval L of about 5mm to about 15mm. With the flash back prevention part 150 as above, the linear velocity of the fuel is equalized on the upstream side of the first reaction part 130 through the improvement of the first fluid distribution, thereby making it possible to prevent large hot spots from being formed in the first catalyst.

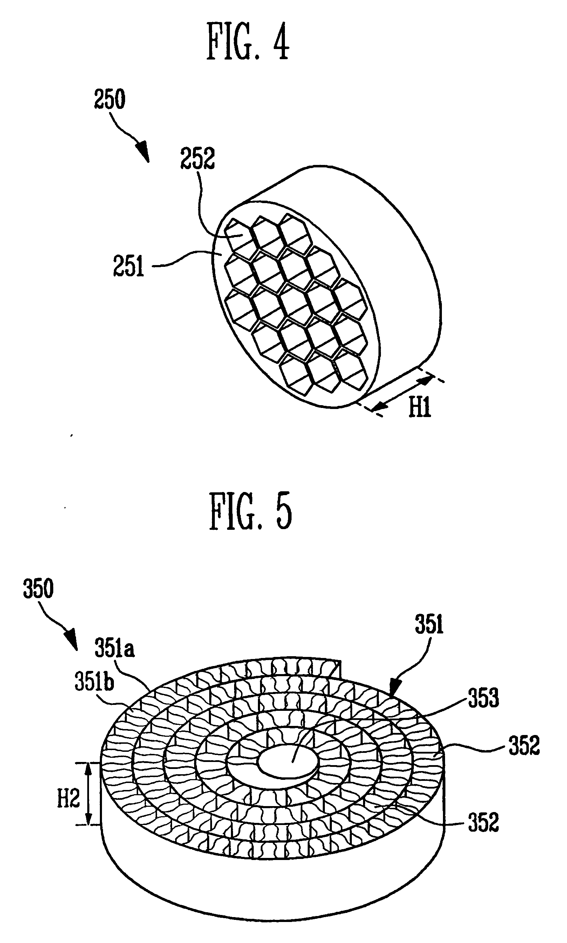

FIG. 4 is a perspective view of a flash back prevention part 250 suitable for a reformer in accordance with the invention. Referring to FIG. 4, the flash back prevention part includes a body 251 and a plurality of paths 252 penetrating through the body 251 in one direction. The body 251 can be manufactured by processing a cylindrical or disk type ceramic or metal mother material in order to form the paths 252 or can be formed in a shape where the plurality of paths 252 are already provided. The plurality of paths 252 have a honeycomb shape. Such a honeycomb shape is one example, but the cross-sectional shape of the body 251 may include paths having a triangular, quadrangular, hexagonal, trapezoid, or circular shape, or any other suitable configuration.

The cells per square inch ("cpsi") of the flash back prevention part 250 may have a range of from 31 cells per cm² to 232,5 cells per cm² (200 cpsi to 1500 cpsi). In some embodiments, the open frontal area of the plurality of paths 252 may be in the range of from 40% to 95% to the cross-section of the body 251. The range as described above is set in consideration of the cell density of the first substrate disposed in the reaction part in the catalytic oxidation method.

Also, the length H1 in one direction of the body 251 can be lengthened to the extent that the length in a width direction is lengthened. For example, when the cross-section of the body 251 is an approximate circle, the length H1 of the body 251 may have the range of from 50% to 100% for the length (for example, diameter) in the width direction. In other words, the length H1 of the body 251 may be designed to be lengthened in a predetermined range as the cross-section of the body 251 is enlarged. In the predetermined range, if the length H1 is shorter than 50% of the length in the width direction or longer than 100% thereof, the improvement effect in the fuel distribution or the gas hourly space velocity of the flash back prevention part 250 may be insignificant.

The flash back prevention part 250 in the present embodiment may be adapted to a double pipe structure in which the first reaction part performing an oxidation reaction is surrounded by the second reaction part performing a reforming reaction, similarly to the flash back prevention part of the reformer as shown in FIG. 3. Meanwhile, in the case of the double pipe structure where the second reaction part is surrounded by the first reaction, the body 251 of the flash back prevention part 250 of the present embodiment may have a modified disk ring shape having a space in the central portion thereof, where the second reaction part can be disposed.

FIG. 5 is a perspective view of another flash back prevention part 350 suitable for use in a reformer according to the invention. Referring to FIG. 5, the flash back prevention part 350 according to the present embodiment includes a body 351 made of metal and a plurality of paths 352 penetrating through the body 351 in one direction. In some embodiments, the cross-section of the body 351 is spirally formed. However, such a spiral cross-section is one example, and the body 351 may be modified to have a symmetrical structure such as a circular or oval shape.

The body 351 can be manufactured in the manner that a first body 351a on a sheet and a wrinkle-shaped second body 351b are overlapped with a predetermined adhesive coated between the first body 351a and the second body 351b that is brazed by applying heat thereto in order to secure first body 351a and second body 351b together after they have been spirally wound. A plurality of paths 352 are formed in the space between the first body 351a and the second body 351b. The manufacturing method as above, which is a method that can simply manufacture the flash back prevention part 350 and the first substrate for the reaction part in the catalytic oxidation method according to the present embodiment in a metal monolith shape, has advantages that a manufacturing cost can be reduced and it is proper for a mass production. Also, if the flash back prevention part 350 is manufacture using the metal monolith, it is possible to obtain high surface area per unit volume, open frontal area with a wide inlet, and excellent attrition resistance, etc.

The cells per square inch (cpsi) of the flash back prevention part 350 may have the range of from 31 cells per cm² to 232,5 cells per cm² (200 cpsi to 1500 cpsi). In some embodiments the open frontal area of the plurality of paths 352 may have the range of from 40% to 95% for the cross-section of the body 351. The range as described above is set in consideration of the cell density of the first substrate disposed in the reaction part in the catalytic oxidation method. The cell density of the flash back prevention part 350 according to the present embodiment can be properly adjusted, designing repetition distance of the paths 352 and wall thickness between the paths 352 according to heat transfer conditions required in the reformer or conductible surface area, and/or constitution or shape of the body 351.

Also, the length H2 in one direction of the body 351 can be lengthened to the extent that the length in a width direction is lengthened. For example, assuming that the cross-section of the body 351 is an approximate circle, the length H2 of the body 351 may be in the range of from 50% to 100% for the length (for example, diameter) in the width direction. In other words, the length H2 of the body 351 may be designed to be lengthened in a predetermined range as the cross-section of the body 351 is enlarged. In the predetermined range, if the length H2 is shorter than 50% of the length in the width direction or taller than about 100% thereof, the improvement effect in the fuel distribution or the gas hourly space velocity of the flash back prevention part 350 may be insignificant.

The flash back prevention part 350 in the present embodiment may be disposed in a double pipe structure to be surrounded by the second reaction part performing a reforming reaction together with the first reaction part performing a catalytic oxidation reaction, similarly to the double pipe structure in which the first reaction part 130 and the flash back prevention part 150 are surrounded by the second reaction part 140 in one direction (see, for example, FIG. 3).

In some embodiments a pipe for transferring fluid similarly to the pipe 60 of FIGS. 1 and 2 may be disposed in the central part 353 of the body 351. In some embodiments a pipe and a second reaction part may be disposed in the central portion 353 of the body 351, similarly to the pipe 60 and the second reaction part 40 of FIGS. 1 and 2. In some embodiments, as in the embodiment of FIG. 5, the central portion 353 may be formed to be wider so that the pipe and the second reaction part can be disposed therein.

## Claims

1. A reformer, comprising:
a first reaction part (30, 130) having a first chamber and a first catalyst disposed inside the first chamber, the first reaction part configured to generate heat by burning a first fuel;
a second reaction part (40, 140) having a second catalyst, the second reaction part configured to be heated by the first reaction part (30, 130) and the second reaction part (40, 140) further configured to reform a second fuel; and
a flash back prevention part (50, 150, 250, 350) disposed in a flow of the first fuel and oxidant, upstream of the first catalyst; wherein the flash back prevention part (50, 150, 250, 350) is separated from the first catalyst by a predetermined interval of from 5 mm to 15 mm, wherein a length of the flash back prevention part (50, 150, 250, 350) is from 50% to 100% of a width of the flash back prevention part (50, 150, 250, 350), and wherein the length of the flash back prevention part (50, 150, 250, 350) is oriented in the direction of first fuel flow.

2. A reformer according to claim 1, wherein an end portion of the second catalyst is disposed adjacent to the flash back prevention part (50, 150, 250, 350).

3. A reformer according to any preceding claim, wherein the first catalyst comprises a first substrate having a plurality of paths and active materials supported in the first substrate.

4. A reformer according to any preceding claim, wherein the flash back prevention (50, 150, 250, 350) part comprises a monolith.

5. A reformer according to Claim 4, wherein the monolith has the same cross-sectional structure and shape as the first substrate.

6. A reformer according to Claim 4 or 5, wherein a cross-section of the monolith has a honeycomb shape.

7. A reformer according to Claim 4 or 5, wherein the monolith has a spiral shape wherein a first member on a sheet and a corrugated second member are overlappedly wound.

8. A reformer according to one of Claims 4 to 7, wherein an open frontal area of a plurality of paths of the monolith is from 40% to 95% of the cross-section of the monolith.

9. A reformer according to one of Claims 4 to 7, wherein a cell density of the monolith is from 31 cells per cm² to 232,5 cells per cm² (200 cells per square inch "cpsi" to 1500 cpsi).

10. A reformer according to any preceding claim, wherein the second reaction part (40, 140) comprises a second chamber contacting the first chamber and a second substrate disposed inside the second chamber, and wherein the second catalyst further comprises an active material supported in the second substrate.

11. A reformer according to Claim 10, wherein one end of the second substrate is positioned on an upstream side, wherein the one end of the second substrate is configured to receive the second fuel, and wherein the one end of the second substrate is disposed adjacent to the flash back prevention part (50, 150, 250, 350).

12. A reformer according to Claim 10 or 11, wherein the second substrate has a pellet or a marble shape.

13. A reformer according to Claim 10, 11 or 12, wherein the second substrate comprises a ceramic or a metal monolith.

14. A reformer according to any preceding claim, wherein the first reaction part (30, 130) and the second reaction part (40, 140) have a double pipe structure whose both ends are closed, each having a plurality of opening parts for fluid movement.

## Patentansprüche

1. Reformer, der aufweist:
ein erstes Reaktionsteil (30, 130) mit einer ersten Kammer und einem innerhalb der ersten Kammer angeordneten ersten Katalysator, wobei das erste Reaktionsteil ausgebildet ist, um Wärme durch Verbrennen eines ersten Brennstoffes zu erzeugen;
ein zweites Reaktionsteil (40, 140) mit einem zweiten Katalysator, wobei das zweite Reaktionsteil ausgebildet ist, um durch das erste Reaktionsteil (30, 130) erwärmt zu werden, und wobei das zweite Reaktionsteil (40, 140) außerdem ausgebildet ist, um einen zweiten Brennstoff zu deformieren; und
ein Rückschlagverhinderungsteil (50, 150, 250, 350), das in einem Strom des ersten Brennstoffes und eines Oxidationsmittels stromaufwärts vom ersten Katalysator angeordnet ist; wobei das Rückschlagverhinderungsteil (50, 150, 250, 350) vom ersten Katalysator um einen vorgegebenen Abstand von 5 mm bis 15 mm getrennt ist, wobei eine Länge des Rückschlagverhinderungsteils (50, 150, 250, 350) von 50 % bis 100 % einer Breite des Rückschlagverhinderungsteils (50, 150, 250, 350) beträgt, und wobei die Länge des Rückschlagverhinderungsteils (50, 150, 250, 350) in der Richtung des ersten Brennstoffstromes ausgerichtet ist.

2. Reformer nach Anspruch 1, bei dem ein Endabschnitt des zweiten Katalysators benachbart dem Rückschlagverhinderungsteil (50, 150, 250, 350) angeordnet ist.

3. Reformer nach einem der vorhergehenden Ansprüche, bei dem der erste Katalysator ein erstes Substrat mit einer Vielzahl von Wegen und aktiven Materialien aufweist, die im ersten Substrat getragen werden.

4. Reformer nach einem der vorhergehenden Ansprüche, bei dem das Rückschlagverhinderungsteil (50,150,250, 350) einen Monolith aufweist.

5. Reformer nach Anspruch 4, bei dem der Monolith die gleiche Querschnittsstruktur und Form wie das erste Substrat aufweist.

6. Reformer nach Anspruch 4 oder 5, bei dem ein Querschnitt des Monolith eine Wabenform aufweist.

7. Reformer nach Anspruch 4 oder 5, bei dem der Monolith eine Spiralform aufweist, wobei ein erstes Element auf einer Schicht und ein gewelltes zweites Element überlappt gewickelt sind.

8. Reformer nach einem der Ansprüche 4 bis 7, bei dem ein offener vorderer Bereich einer Vielzahl von Wegen des Monoliths von 40 % bis 95 % des Querschnittes des Monoliths beträgt

9. Reformer nach einem der Ansprüche 4 bis 7, bei dem eine Zellendichte des Monoliths von 31 Zellen pro cm² bis 232,5 Zellen pro cm² (200 Zellen pro in.² bis 1500 Zellen pro in.²) beträgt.

10. Reformer nach einem der vorhergehenden Ansprüche, bei dem das zweite Reaktionsteil (40, 140) eine zweite Kammer, die die erste Kammer kontaktiert, und ein innerhalb der zweiten Kammer angeordnetes zweites Substrat aufweist, und wobei der zweite Katalysator außerdem ein aktives Material aufweist, das im zweiten Substrat getragen wird.

11. Reformer nach Anspruch 10, bei dem ein Ende des zweiten Substrates auf einer stromaufwärts gelegenen Seite positioniert ist, wobei das eine Ende des zweiten Substrates ausgebildet ist, um den zweiten Brennstoff aufzunehmen, und wobei das eine Ende des zweiten Substrates benachbart dem Rückschlagverhinderungsteil (50, 150, 250, 350) angeordnet ist.

12. Reformer nach Anspruch 10 oder 11, bei dem das zweite Substrat eine Pellet- oder Marmorform aufweist.

13. Reformer nach Anspruch 10, 11 oder 12, bei dem das zweite Substrat ein keramisches oder metallisches Monolith aufweist.

14. Reformer nach einem der vorhergehenden Ansprüche, bei dem das erste Reaktionsteil (30, 130) und das zweite Reaktionsteil (40, 140) eine Doppelrohrkonstruktion aufweisen, deren beiden Enden verschlossen sind, wobei ein jedes eine Vielzahl von Öffnungsteilen für die Fluidbewegung aufweist.

## Revendications

1. Reformeur, comprenant :
un premier élément de réaction (30, 130), comportant une première chambre et un premier catalyseur positionné à l'intérieur de la première chambre, le premier élément de réaction étant configuré de sorte à produire de la chaleur en brûlant un premier combustible ;
un deuxième élément de réaction (40, 140), comportant un deuxième catalyseur, le deuxième élément de réaction étant configuré de sorte à être chauffé par le premier élément de réaction (30, 130) et le deuxième élément de réaction (40, 140) étant en outre configuré de sorte à reformer un deuxième combustible ; et
un élément empêchant un retour de flamme (50, 150, 250, 350), agencé dans un écoulement du premier combustible et d'un oxydant, en amont du premier catalyseur, l'élément empêchant un retour de flamme (50 , 150, 250, 350) étant séparée du premier catalyseur par un intervalle prédéterminé, compris entre 5 mm et 15 mm, une longueur de l'élément empêchant un retour de flamme (50, 150, 250, 350) représentant 50% à 100% d'une largeur de l'élément empêchant un retour de flamme (50, 150, 250, 350) et la longueur de l'élément empêchant un retour de flamme (50, 150, 250, 350) étant orienté dans la direction de l'écoulement du premier combustible.

2. Reformeur selon la revendication 1, dans lequel une partie d'extrémité du deuxième catalyseur est agencée en un point adjacent à l'élément empêchant un retour de flamme (50, 150, 250, 350).

3. Reformeur selon l'une quelconque des revendications précédentes, dans lequel le premier catalyseur comprend un premier substrat, comportant plusieurs trajectoires et des matériaux actifs supportés dans le premier substrat.

4. Reformeur selon l'une quelconque des revendications précédentes, dans lequel l'élément empêchant un retour de flamme (50, 150, 250, 350) comprend un monolithe.

5. Reformeur selon la revendication 4, dans lequel le monolithe a une structure de section transversale et une forme identiques à celles du premier substrat.

6. Reformeur selon les revendications 4 ou 5, dans lequel une section transversale du monolithe a une forme en nid d'abeilles.

7. Reformeur selon les revendications 4 ou 5, dans lequel le monolithe a une forme en spirale, un premier élément sur une feuille et un deuxième élément cannelé étant enroulés par chevauchement.

8. Reformeur selon l'une des revendications 4 à 7, dans lequel une zone frontale ouverte de plusieurs trajectoires du monolithe représente 40% à 95% de la section transversale du monolithe.

9. Reformeur selon l'une des revendications 4 à 7, dans lequel une densité des cellules du monolithe est comprise entre 31 cellules par cm² et 232,5 cellules par cm² (200 cellules par pouce carré « cpsi » et 1500 cpsi).

10. Reformeur selon l'une quelconque des revendications précédentes, dans lequel la deuxième élément de réaction (40, 140) comprend une deuxième chambre contactant la première chambre, et un deuxième substrat positionné à l'intérieur de la deuxième chambre, le deuxième catalyseur comprenant en outre un matériau actif supporté dans le deuxième substrat.

11. Reformeur selon la revendication 10, dans lequel une extrémité du deuxième substrat est positionnée sur un côté amont, ladite une extrémité du deuxième substrat étant configurée de sorte à recevoir le deuxième combustible, ladite une extrémité du deuxième substrat étant agencée en un point adjacent à l'élément empêchant un retour de flamme (50, 150, 250, 350).

12. Reformeur selon les revendications 10 ou 11, dans lequel le deuxième substrat a une forme de pastille ou une forme marbrée.

13. Reformeur selon les revendications 10, 11 ou 12, dans lequel le deuxième substrat comprend un monolithe à base de céramique ou de métal.

14. Reformeur selon l'une quelconque des revendications précédentes, dans lequel le premier élément de réaction (30, 130) et le deuxième élément de réaction (40, 140) ont une structure à deux tubes, dont les deux extrémités sont fermées, chacune comportant plusieurs parties d'ouverture pour l'écoulement du fluide.
